(19) Europäisches Patentamt

European Patent Office

Office européen des brevets

(11) **EP 3 468 007 A1**

(12) **EUROPEAN PATENT APPLICATION**

(43) Date of publication:
**10.04.2019 Bulletin 2019/15**

(51) Int Cl.:
*H02K 3/04* (2006.01)         *H02K 3/47* (2006.01)
*H02K 21/14* (2006.01)

(21) Application number: **18197642.4**

(22) Date of filing: **28.09.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **04.10.2017 CH 12172017**

(71) Applicant: **Portescap SA
2300 La Chaux de Fonds (CH)**

(72) Inventors:
• **Montagnat-Rentier, Alexis**
  **2300 La Chaux-de-Fonds (CH)**
• **Baudey, Julien**
  **2300 La Chaux-de-Fonds (CH)**
• **Buehlmann, David**
  **2300 La Chaux-de-Fonds (CH)**

(74) Representative: **Poindron, Cyrille et al
Novagraaf International SA
Chemin de l'Echo 3
1213 Onex (CH)**

(54) **FAT STATOR COIL FOR ELECTRICAL MOTOR**

(57)     Coil (80) for a stator of an electrical slotless motor (2),
the electrical slotless motor (2) further comprising a rotor (1) comprising at least one magnet (10),
the coil (80) comprising a cylindrical portion (80c) arranged to face the at least one magnet (10),
characterized in that a radial thickness (100) of the cylindrical portion (80c) is greater than 28%, preferably 30% of an internal radius (102) of the cylindrical portion (80c).

Fig. 1

EP 3 468 007 A1

**Description**

The present invention relates to the field of electrical motors, and relates in particular to small electrical motors with magnets for high peak torque and high rotation speed, for example used in industrial power tools.

It is known from the prior art document US8847459B2 an electrical motor for high speed using a stator coil for power tool use. In the present application, "small electrical motor" refers to a motor typically up to 60 mm of external diameter and 10kW of peak power or 1kW of continuous power, or typically around 5Nm of torque at 20 000 rpm but not limited thereto.

The disadvantages of said motor and coil is that a maximum short-term allowable peak torque is limited due to thermal limitation or thermal destruction of a coil. As such the motor and coil according to the prior art are not suitable for high demanding industrial use, high continuous torque and high short-term peak torque requests from user. Furthermore, lifetime of prior art motor and coil is reduced if used in these ranges of speed and torques.

An aim of the present invention is to overcome the disadvantages of the prior art document mentioned above, and in particular to propose an electrical motor and a stator coil suitable for reaching high rotation speeds, high continuous torques and high short-term peak torques.

A first aspect of the present invention is a coil for a stator of an electrical slotless motor,
the electrical slotless motor further comprising a rotor comprising at least one magnet,
the coil comprising a cylindrical portion arranged to face the at least one magnet,
characterized in that a radial thickness of the cylindrical portion is greater than 28%, preferably 30% of an internal radius of the cylindrical portion.

The coil is made out of wire, such as copper or the like, or any other metallic conductive material. The cylindrical portion is arranged to face or to be in regard of the at least one magnet,

This allows to propose a coil for high demanding industrial use, with high rotation speeds, high continuous torques and high peak torques requests from the user. The invention proposes a coil fat enough or presenting enough radial thickness to reach such requests or intense uses without reaching thermal deterioration or thermal destruction, due to high mass of the coil in a given volume, despite the increase of weight or cost due to material weight or costs. In other words, the invention aims to allow intense use with the coil having its radial thickness of the cylindrical portion greater than 28%, preferably 30% of an internal radius of the cylindrical portion, which is normally considered unnecessary or waste material in the considered field.

Advantageously, the radial thickness of the cylindrical portion is greater than 22%, preferably 25% of an external radius of the cylindrical portion.

Advantageously, the radial thickness of the cylindrical portion is greater than 25%, preferably 28% of an average radius of the cylindrical portion.

Advantageously, the electrical slotless motor presents an outer surface defining a smallest external dimension in regards of the at least one magnet, and the coil comprises a cylindrical portion arranged to face the at least one magnet,
characterized in that a radial thickness of the cylindrical portion is greater than 17.5% of the smallest external dimension.

The smallest external dimension is a smallest outer dimension of a carter or yoke of the motor, considered in a cross-section passing through the magnet, coil and carter. It can be also seen as a diameter of a inner circle (or inscribed circle) of a polygon defined by a cross-section of the carter. Preferably, the cross section is in the middle of a length or a longitudinal distance of said at least one magnet.

This allow to propose a coil reaching high peak torque requests from a user.

A second aspect of the present invention is a coil for a stator of an electrical slotless motor,
characterized in that the mass of the coil is greater than 17.5% of the total mass of the electrical slotless motor.

The mass of the electrical motor is considered as a relevant mass of said motor to participate in the functioning of motor. The motor further comprising an external tube, a shaft, two bearings, a lamination stack, balancing rings and flanges. That is to say that the relevant total mass of the motor could be defined as the sum mass of said external tube, of said coil, of said shaft, of said at least one magnet, of said bearings, of said lamination stack, of said balancing rings and of said flanges.

This allows to propose a coil for a motor with high continuous torques and high peak torques requests from a user, without reaching thermal limitation or thermal destruction.

A third aspect of the present invention is a coil for a stator of an electrical slotless motor, the coil presenting a maximum short-term allowable peak torque before thermal deterioration of said coil and a maximum continuous allowable torque before thermal deterioration of said coil, characterized in that a ratio between the maximum short-term allowable peak torque and the maximum continuous allowable torque is greater than nine, preferably greater than ten.

This allows to propose a coil for a motor with high continuous torques and high peak torques requests from a user, without reaching thermal limitation or thermal destruction.

A fourth aspect of the present invention is a coil according to any one of the preceding aspects, wherein the coil is a bell shaped coil.

This allows to propose a compact coil for high torques as previously explained, suitable for safe use and no thermal destruction. Indeed, the coil has a high mass of copper or other suitable material for a given volume or occupied space.

Advantageously, said coil is a U-shaped coil.

This allows to propose a compact and rigid coil for high demanding industrial use as described above.

Advantageously, said coil comprises a first head section outwardly extending at a first longitudinal extremity of the coil and a second head section inwardly extending at a second longitudinal extremity of the coil.

What is meant by a head section of coil is a part wherein the wires are bent to permit half-turn or U-turn of wires. In other words, the head section presents a bun-shape or a chignon-shape wherein phases or wires are wound according to a first direction in the first head section and wound according to a second direction, opposite to the first direction, in the second head section. In other words, the coil comprises wires, and each wire is bent and part of the first head section, the cylindrical portion and the second head section.

Advantageously, the cylindrical portion is arranged between said first head section and said second head section.

This allows to propose a compact and rigid coil, suitable for a motor with high continuous torques and high peak torques requests from a user, without reaching thermal limitation or thermal destruction.

Advantageously, the electrical slotless motor further comprises an external tube defining the outer surface.

This allows to propose a motor with good thermal dissipation and a compact shape due to cylindrical shape of the external tube.

A fifth aspect of the present invention is an electrical slotless motor comprising a coil according to any one of the preceding aspects.

This allows to propose a motor with high continuous torques and high peak torques requests from a user, without reaching thermal limitation or thermal destruction of said coil.

Advantageously, the rotor comprises a shaft presenting a longitudinal axis, and wherein the cylindrical portion presents a longitudinal axis coaxial with the longitudinal axis of said shaft.

This allows to propose a motor with shaft to transmit torque and speed to an interface piece connected to said motor, to allow to function as such as screwdriver or nutdriver.

Advantageously, the coil comprises a first head section outwardly extending at a first longitudinal extremity of the coil and a second head section inwardly extending at a second longitudinal extremity of the coil, and wherein each of the first head section and the second head section presents a longitudinal axis coaxial with the longitudinal axis of said shaft.

This allows to propose a motor with a compact design of the coil and able to reach high peak torques and high torques without reaching thermal destruction or thermal limitation, nor mechanical limitation due to rotation.

Advantageously, the coil further comprises electrical wire conductors substantially comprised in a plan comprising the longitudinal axis of said shaft.

This allows to propose a motor for high torques and high power factor, with high magnetic forces optimization.

A sixth aspect is a use of the electrical slotless motor of any one of preceding aspects, comprising the steps of :

- using during ten seconds the electrical slotless motor at a torque that is 5% of a maximum short-term allowable peak torque achieved with a current flowing through the conductors of the coil generating a heat and before thermal deterioration of said coil, which is nine, preferably ten times greater that a maximum continuous allowable torque before thermal deterioration of said coil during a continuous use of the motor,
- using during one second the electrical slotless motor at the maximum short-term allowable peak torque,
- storing heat in said coil.

Advantageously, the steps are :

- using during ten seconds the electrical slotless motor at a torque that is 5% of a maximum short-term allowable peak torque achieved with a current flowing through the conductors of the coil generating a heat and before thermal deterioration of said coil, which is nine, preferably ten times greater that a maximum continuous allowable torque before thermal deterioration of said coil during a continuous use of the motor,
- using during one second the electrical slotless motor at the maximum short-term allowable peak torque,
- storing heat in said coil,
- stop using the electrical slotless motor during 3 seconds,
- repeating said steps during at least four hours, preferably eight hours.

Advantageously, the steps are :

- using during ten seconds the electrical slotless motor at a torque that is 5% of a maximum short-term allowable peak torque achieved with a current flowing through the conductors of the coil generating a heat and before thermal deterioration of said coil, which is nine, preferably ten times greater that a maximum continuous allowable torque before thermal deterioration of said coil during a continuous use of the motor,
- using during one second the electrical slotless motor at the maximum short-term allowable peak torque,
- storing heat in said coil,
- repeating said steps during at least four hours, preferably eight hours.

Of course, the step of storing heat in said coil is preceding or simultaneous to a heat release to an external environment of the motor. In other words, the coil according to the invention is sized to temporarily store heat during a high peak torque supply period, to allow heat release during the whole cycle or otherwise, with temperatures kept below the critical temperatures damaging the coil. The step of stop using the electrical motor during 3 seconds means that it is to be considered as a pause or a break in the electrical use of the electrical slotless motor (i.e. stop the electrical supply of the electrical slotless motor). In other words, this period of time could be adapted to less than 3 seconds, such as 2 seconds. This period may correspond to the change of screw to be screwed by an operator or a machine, or the time required to go to the next screw to be screwed, or to the next operation to be done thanks to the electrical slotless motor.

This allows to propose a motor and a coil reaching the high cycle torque requests of a user without thermal deterioration of the coil, in particular when motor is used in a screwdriver or nutdriver for industrial power tools. The steps of using the electrical slotless motor at a torque that is 5% of a maximum short-term allowable peak torque before thermal deterioration of said coil during ten seconds, and using the electrical slotless motor at the maximum short-term allowable peak torque that is nine, preferably ten times greater that a maximum continuous allowable torque before thermal deterioration of said coil, during one second, and of storing heat in said coil can be grouped to form a single cycle or a so-called one-shot cycle. This cycle may be repeated many times during a shift of four hours or eight hours, with said pause or break therebetween. The duration of the repetition can be longer such as one day or two days or more, depending on the limitation of the user, such as the need to change the industrial tool such as screwdriver or nutrunner. Transition between steps related to continuous torque and peak torque can be ramp-shaped or step-shaped. Such possibility of doing said one-shot cycle or said repetition of cycles is available thanks to the electrical slotless motor according to the fifth aspect, in contrast with the electrical motors of the prior art, for which the thermal limitation is reached.

Advantageously, the step of using during one second the electrical slotless motor at the maximum short-term allowable peak torque, may be replaced by a step of using during one second the electrical slotless motor with a ramp-shaped request up to the maximum short-term allowable peak torque.

This allows to use the electrical slotless motor with a progressive shape of torque from the preceding torque at which it is used to the maximum short-term allowable peak torque, that may be required in some application of screwing.

Other features and advantages of the present invention will appear more clearly from the following detailed description of particular non-limitative examples of the invention, illustrated by the appended drawings where:

- figure 1 represents an electrical slotless motor according to the present invention,

- figure 2 represents a coil for a stator of the electrical slotless motor according to the present invention,

- figure 3 represents a thermal limitation of a coil and motor according to the present invention.

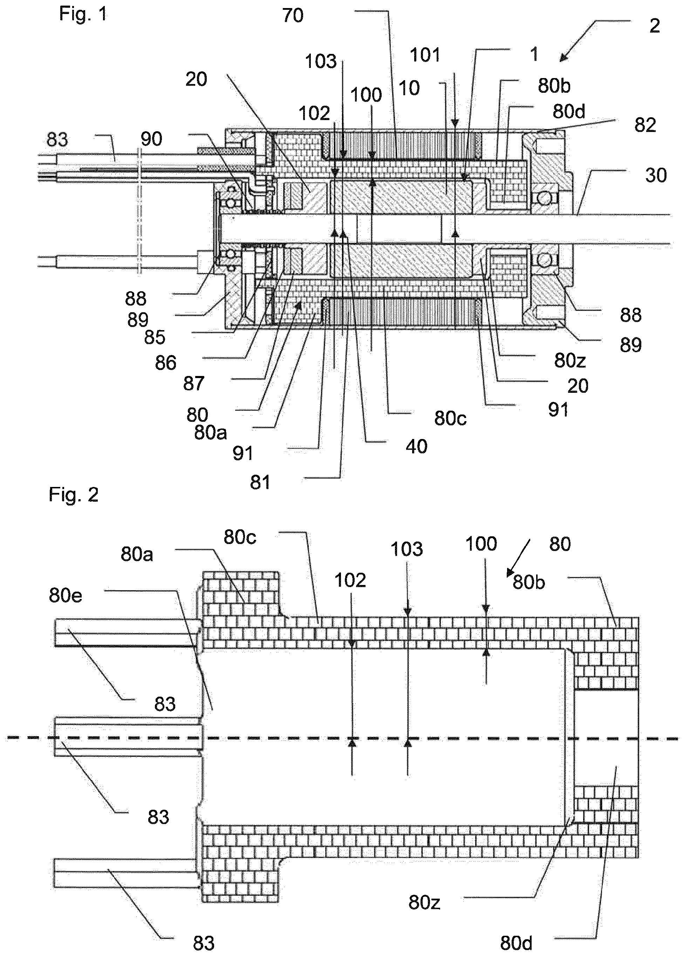

Figure 1 represents an electrical slotless motor according to the present invention and a coil for a stator of said electrical slotless motor and. Figure 2 represents the coil for the stator of the electrical slotless motor, without showing said motor.

Electrical slotless motor 2 comprises a stator comprising a coil 80 and a rotor 1 comprising at least one magnet 10 mounted on a support member 40 of said motor 2, said support member 40 being mounted on a shaft 30 of said motor. The shaft 30 presents a longitudinal axis forming a rotation axis of said rotor 1. The at least one magnet 10, for example one or two or four magnets 10 form a cylindrical surface of the rotor 1, so that the magnet 10 directly faces the stator coil or coil 80 of the said electrical motor 2. Thereby an air gap 70 is formed between the magnet 10 and the coil 80. The at least one magnet 10 may be manufactured in one block, such as a monobloc. The number of magnets is not limited. The magnet 10 is mounted on the support member 40, but the shaft 30 and the support member 40 may also be manufactured in one piece, thereby forming a monobloc shaft or shaft 30.

The rotor 1 further comprises two rings 20 mounted by force on said shaft 30 to be secured on said shaft 30. The two rings 20 are mounted at each longitudinal extremity of the shaft 30 and at the longitudinal extremity of magnet 10 mounted on shaft 30.

The coil 80 comprises electrical wires or electrical wire conductors made out of copper or any other metallic material or material adapted to conduct electricity. The wires are wound to form the coil 80 and are substantially comprised in a plan comprising the longitudinal axis of said shaft 30 when coil 80 is installed on said motor 2, to enhance magnetic compactness and the filling factor of coil 80, that is to say to reach a maximum content of wound wire in a determined volume of said coil 80. As represented in figure 2, the coil 80 comprises a winding radius 80z. The stator further comprises a lamination stack 81 mounted over said coil 80 and axially maintained by two plastic or steel rings 91 of said stator.

The electric motor 2 further comprises a set of phase wires or live wires 83 connected to the coil 80 and an incremental coder 85, that may be a Hall effect sensor as an example, arranged to monitor the rotating speed or rotating displacement of the rotor 1, with the help of sensing magnet 86 and magnet support 87 mounted on the ring 20 or directly on shaft 30.

The electric motor 2 further comprises a set of bearings, such as ball bearings 88 and main flanges 89, made out of aluminium or steel, and mounted at each of its extremities, and a spring 90 arranged to preload the ball bearings 88. The electric motor 2 further comprises an electric motor tube or external tube 82 and said main flanges 89. The lamination stack 81 is maintained into the external tube 82 by the two plastic or steel rings 91, and the coil 80 is glued in said external tube 82 and lamination stack 81.

As an alternative, the electric motor 2 can be sensorless, that is to say with only phase cable.

Motor 2 presents an outer surface defining a smallest external dimension 101 of motor 2. The outer surface defining the smallest external dimension is the external dimension of external tube 82. In other words, the external tube 82 is a steel cylinder having the smallest external dimension 101 that is a radial thickness or motor radial thickness 101, and external tube 82 is coaxially mounted with the shaft 30, in case of full assembly of motor 2.

Considering figure 1 and figure 2 together, the coil 80 for the stator comprises a cylindrical portion 80c arranged to be in regards of or to face the at least one magnet 10, a first head section 80a outwardly extending at a first longitudinal extremity of said coil 80 and a second head section 80b inwardly extending at a second longitudinal extremity of the coil 80. The cylindrical portion 80c is arranged between said first head section 80a and said second head section 80b. In other words, the coil 80 is bell-shaped or U-shaped.

The coil 80 and/or the cylindrical portion 80c present a longitudinal axis too, that is coaxial with the longitudinal axis of said shaft 30 when the shaft 30 and the coil 80 are mounted on said electrical motor 2. For this mounting and to allow passage to said shaft 30, the coil 80 comprises a first opening 80e on the side of the live wires 83 and a second opening 80d at the opposite side. The winding radius 80z is located close to the second head section 80d, linking the cylindrical portion 80c and the second head section 80b.

The cylindrical portion 80c has a radial thickness or coil radial thickness 100, an internal radius 102 and an external radius 103.

The coil 80 is considered as being fat or having the capacity to allow said motor 2 to reach high rotation speed typically up to 40 000 rpm, high peak torques and high continuous torques on user requests when the radial thickness 100 of the cylindrical portion 80c is greater than 28%, preferably 30% of the internal radius 12 or when the radial thickness 100 of the cylindrical portion 80c is greater than 22%, preferably 25% of the external radius 103 of the cylindrical portion 80c, or when the radial thickness 100 of the cylindrical portion 80c is greater than 25%, preferably 28% of the average radius of the cylindrical portion 80c, the average radius being the average of the internal radius and the external radius along the cylindrical portion 80c of the coil 80 arranged to facing the magnet 10.

When the radial thickness 100 is greater than 17.5 % of the smallest external dimension 101 of said motor 2, preferably 18%, and more preferably 20%, the coil is also able to reach such high peak torques and high continuous torques before thermal destruction or limitations

In other words, the coil 80 is considered as fat if the mass of the coil 80 is greater than 17.5% of the mass of said electrical motor 2, preferably 18%, and more preferably 20%.

The total mass of the electrical motor 2 is considered as a relevant mass of said motor 2 to participate in the functioning of motor 2. That is to say that the relevant total mass of motor 2 could be defined as the sum mass of said external tube 82, of said coil 80, of said shaft 30, said support member 40, of said at least one magnet 10, of said bearings 88, of said lamination stack 81, of said rings 20, said flanges 89, said lives wires 83, said spring 90, said incremental coder 85, sensing magnet 86 and magnet support 87.

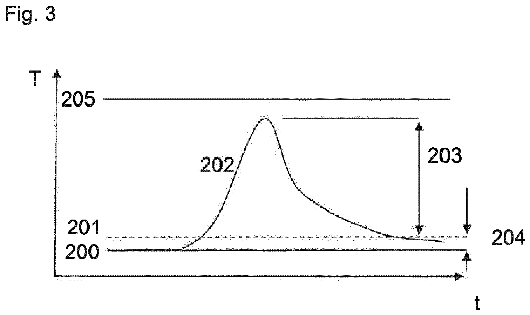

Figure 3 represents a thermal limitation of a coil and motor according to the present invention.

The thermal limitation of said coil 80 is presented as an elevation of temperature 203 of said coil 80 due to the high peak torques and/or high continuous torques requested by a user, in particular in the field of industrial power tools. A typical use is a high peak torque or maximum short-term allowable peak torque before thermal deterioration of one second preceded and/or followed by a ten second use at a continuous torque of 5% of the maximum short-term allowable peak torque before thermal deterioration, for a duration of a shift of four hours or a shift of eight hours, but said shift of use can be longer such as one day or two days thereby limited by the use of tool on which said motor 2 is connected. The continuous torque can be at medium speed (10 000 to 20 000 rpm) or higher speed up to 40 000 rpm. Typically, the maximum short-term allowable peak torque is greater than nine, preferably ten times a maximum allowable continuous torque, at a medium speed of 10 000 to 20 000 rpm or higher speed up to 40 000 rpm. In the case of a peak torque request, the elevation of temperature 202 of the coil 80 is adiabatic, that is to say there is not enough time to evacuate temperature to the environment of said motor 2. In other words, the coil temperature 202 increases too quickly to allow for evacuation and the coil 80 is deteriorated if the coil temperature 202 reaches 150°C or more, which is a usual thermal limit 205 of a coil and motor manufacturing. That is to say that the coil 80 is considered as an adiabatic fuse, and thermal limitation before deterioration of the coil 80 is set at 150°C. Thermal limit for destruction is deemed to be above the thermal limitation before deterioration. Typically, the maximum short-term allowable peak torque is up to around 3 N.m.

Figure 3 is a graphic where the abscissa represents temperature, preferably in Celsius degrees and the ordinate represents time, preferably in seconds, and shows different temperatures in the case of use presented above, with typical use of high peak torque and continuous torque, with peak torque during one second. A stator temperature 200 is represented as a flat line as the coil is considered as an adiabatic fuse, and motor 2 and its body is considered at room temperature, e.g. 25 °C. Theoretical impact of thermal resistance on coil 204 is represented as a dashed flat line of theoretical coil temperature due to low continuous torque 201.

Figure 3 clearly shows the elevation of temperature of coil temperature 202, and in particular the quick and high elevation of temperature 203 due to the high peak torque. Said high elevation of temperature 203 drives the coil temperature 202 near or close to the usual thermal limit 205 of the coil and motor manufacturing.

In other words, a coil difference of temperature in adiabatic conditions ΔT where temperature can not be evacuated from coil 80 is

$$\Delta \mathrm{T} = \frac{R.I^2}{Cp.m} t$$

where ΔT is in °C, R is a total resistance of coil 80 in ohms, I is an current intensity traversing coil 80 in Amperes during a short time t in seconds (typically one second, or a time for which adiabatic conditions are reached for high peak torques), Cp is a heat capacity of coil material in $J.kg^{-1}.K^{-1}$ and m is the coil mass in kg.

In addition, torque is usually defined as $C = k.I$ where C is torque in N.m, k is a torque constant for a given coil 80 in N.m/A and I is the current intensity traversing coil 80 in Amperes. Thereby, the maximum short-term allowable peak torque before thermal deterioration of said coil 80 is clearly linked to the root square of the elevation of temperature 203 due to high peak torque.

Finally, a coil difference temperature in non adiabatic conditions ΔT where temperature can be evacuated from coil 80 is

$$\Delta \mathrm{T} = R.I^2 Rth$$

where ΔT is in °C, R is the total resistance of coil 80 in ohms previously defined, I is the current intensity traversing coil 80 in Amperes during continuous torque, and Rth is a thermal resistance in Kelvin per Watt between the external tube 82 of motor 2 in contact with ambient air and the coil 80. Thereby, the maximum continuous allowable torque is defined and not linked to time duration as maximum short-term allowable peak torque does.

It is of course understood that obvious improvements and/or modifications for one skilled in the art may be implemented, still being under the scope of the invention as it is defined by the appended claims.

**Claims**

1.    Coil (80) for a stator of an electrical slotless motor (2), the electrical slotless motor (2) further comprising a rotor (1) comprising at least one magnet (10), the coil (80) comprising a cylindrical portion (80c) arranged to face the at least one magnet (10), **characterized in that** a radial thickness (100) of the cylindrical portion (80c) is greater than 28%, preferably 30% of an internal radius (102) of the cylindrical portion (80c).

2.    Coil (80) for a stator of an electrical slotless motor (2), **characterized in that** a mass of the coil (80) is greater than 17.5% of a total mass of the electrical slotless motor (2).

3.    Coil (80) according to any one of the preceding claims, wherein the coil (80) is a bell shaped coil (80) or a U-shaped coil (80).

4.    Coil (80) according to any one of the preceding claims, wherein the coil (80) comprises a first head section (80a) outwardly extending at a first longitudinal extremity of the coil (80) and a second head section (80b) inwardly extending at a second longitudinal extremity of the coil (80).

5.    Coil (80) according to claim 4, wherein the cylindrical portion (80c) is arranged between said first head section (80a) and said second head section (80b).

6.    Electrical slotless motor (2) comprising the coil (80) according to any one of the preceding claims.

7.    Electrical slotless motor (2) according to the preceding claim, the electrical slotless motor (2) further comprising a rotor (1), and the rotor (1) comprises a shaft (30) presenting a longitudinal axis, and wherein the cylindrical portion (80c) presents a longitudinal axis coaxial with the longitudinal axis of said shaft (30).

8.    Electrical slotless motor (2) according to the preceding claim, wherein the coil (80) comprises a first head section (80a) outwardly extending at a first longitudinal extremity of the coil (80) and a second head section (80b) inwardly extending at a second longitudinal extremity of the coil (80), and wherein each of the first head section (80a) and the second head section (80b) presents a longitudinal axis coaxial with the longitudinal axis of said shaft (30).

9.    Use of the electrical slotless motor (2) of any one of the claims 6 to 8, comprising the steps of :

- using during ten seconds the electrical slotless

**EP 3 468 007 A1**

motor (2) at a torque that is 5% of a maximum short-term allowable peak torque achieved with a current flowing through conductors of the coil generating a heat and before thermal deterioration of said coil (80), which is nine, preferably ten times greater that a maximum continuous allowable torque before thermal deterioration of said coil (80) during a continuous use of the motor,

- using during one second the electrical slotless motor (2) at the maximum short-term allowable peak torque,

- storing heat in said coil (80).

Fig. 1

Fig. 2

Fig. 3

Europäisches
Patentamt

European
Patent Office

Office européen
des brevets

# EUROPEAN SEARCH REPORT

Application Number

EP 18 19 7642

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2016/073238 A1 (MEDTRONIC XOMED INC [US]) 12 May 2016 (2016-05-12) * paragraphs [0003], [0039] - [0042], [0046]; figure 4 * ----- | 1-9 | INV. H02K3/04 H02K3/47 ADD. H02K21/14 |
| X | US 3 911 299 A (KRISTEN REINER ET AL) 7 October 1975 (1975-10-07) * abstract; figure 1 * ----- | 1-9 | |
| X | CN 103 078 431 A (SEIKO EPSON CORP) 1 May 2013 (2013-05-01) * abstract; figure 1 * ----- | 1-9 | |

| TECHNICAL FIELDS SEARCHED (IPC) |
|---|
| H02K |

The present search report has been drawn up for all claims

| Place of search | Date of completion of the search | Examiner |
|---|---|---|
| The Hague | 16 November 2018 | Ganchev, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 19 7642

This annex lists the patent family members relating to the patent documents cited in the above-mentioned European search report.
The members are as contained in the European Patent Office EDP file on
The European Patent Office is in no way liable for these particulars which are merely given for the purpose of information.

16-11-2018

| Patent document cited in search report | | Publication date | Patent family member(s) | | Publication date |
|---|---|---|---|---|---|
| WO 2016073238 | A1 | 12-05-2016 | AU | 2015343538 A1 | 08-06-2017 |
| | | | CA | 2966989 A1 | 12-05-2016 |
| | | | CN | 107112834 A | 29-08-2017 |
| | | | EP | 3216112 A1 | 13-09-2017 |
| | | | JP | 2018504087 A | 08-02-2018 |
| | | | KR | 20170084119 A | 19-07-2017 |
| | | | US | 2016134165 A1 | 12-05-2016 |
| | | | US | 2018233979 A1 | 16-08-2018 |
| | | | WO | 2016073238 A1 | 12-05-2016 |
| US 3911299 | A | 07-10-1975 | CH | 564274 A5 | 15-07-1975 |
| | | | CS | 167861 B2 | 28-05-1976 |
| | | | DE | 2307800 A1 | 29-08-1974 |
| | | | FR | 2218683 A1 | 13-09-1974 |
| | | | GB | 1447463 A | 25-08-1976 |
| | | | IT | 1007282 B | 30-10-1976 |
| | | | JP | S5642219 B2 | 03-10-1981 |
| | | | JP | S49113106 A | 29-10-1974 |
| | | | NL | 7400787 A | 20-08-1974 |
| | | | US | 3911299 A | 07-10-1975 |
| CN 103078431 | A | 01-05-2013 | CN | 103078431 A | 01-05-2013 |
| | | | JP | 2013058658 A | 28-03-2013 |
| | | | US | 2013062986 A1 | 14-03-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8847459 B2